# EUROPEAN PATENT SPECIFICATION

(11) **EP 3 249 858 B1**
(45) Date of publication and mention of the grant of the patent: **06.02.2019**
(21) Application number: 15897403.0
(22) Date of filing: 03.07.2015
(51) Int. Cl.: H04L 12/70, H04L 12/701

(54) **NETWORK PATH COMPUTATION METHOD, DEVICE AND SYSTEM**
NETZWERKPFADBERECHNUNGSVERFAHREN, -VORRICHTUNG UND -SYSTEM
PROCÉDÉ, DISPOSITIF ET SYSTÈME DE CALCUL D'ITINÉRAIRE DE RÉSEAU

(43) Date of publication of application: 29.11.2017
(73) Proprietor: Huawei Technologies Co., Ltd., Longgang District Shenzhen, Guangdong 518129 (CN)
(72) Inventor: SHI, Lei, Shenzhen Guangdong 518129 (CN); ZHENG, Haomian, Shenzhen Guangdong 518129 (CN); DONG, Jixiong, Shenzhen Guangdong 518129 (CN); WANG, Yufei, Shenzhen Guangdong 518129 (CN); ZENG, Feng, Shenzhen Guangdong 518129 (CN)
(74) Representative: Pfenning, Meinig & Partner mbB
(86) International application number: PCT/CN2015/083290
(87) International publication number: WO 2017/004747

(56) References cited:
- EP-A1- 2 658 149
- EP-A1- 2 843 888
- CN-A- 101 001 200
- CN-A- 101 502 063
- CN-A- 101 610 432
- CN-A- 102 469 009
- DHODY X ZHANG HUAWEI TECHNOLOGIES O GONZALEZ DE DIOS TELEFONICA D CECCARELLI ERICSSON B YOON ETRI D: "Packet Optical Integration (POI) Use Cases for Abstraction and Control of Transport Networks (ACTN); draft-dhody-actn-poi-use-case-04.txt", PACKET OPTICAL INTEGRATION (POI) USE CASES FOR ABSTRACTION AND CONTROL OF TRANSPORT NETWORKS (ACTN); DRAFT-DHODY-ACTN-POI-USE-CASE-04.TXT, INTERNET ENGINEERING TASK FORCE, IETF; STANDARDWORKINGDRAFT, INTERNET SOCIETY (ISOC) 4, RUE DES FALAISES CH- 12, 17 April 2015 (2015-04-17), pages 1-15, XP015105850, [retrieved on 2015-04-17]
- CHOLDA P ET AL: "Recovery and Its Quality in Multilayer Networks", JOURNAL OF LIGHTWAVE TECHNOLOGY, IEEE SERVICE CENTER, NEW YORK, NY, US, vol. 28, no. 4, 15 February 2010 (2010-02-15), pages 372-389, XP011295661, ISSN: 0733-8724
- OKI, E. ET AL.: 'Framework for PCE-Based Inter-Layer MPLS and GMPLS Traffic Engineering' NETWORK WORKING GROUP 30 September 2009, pages 10 - 12, XP055108266
- DHODY, D. ET AL.: 'Packet Optical Integration (POI) Use Cases for Abstraction and Control of Transport Networks (ACTN)' 16 April 2015, page 8, XP015105850

## Description

### TECHNICAL FIELD

The present invention relates to the field of communications technologies, and in particular, to a method, an apparatus, and a system for path computation in a network.

### BACKGROUND

Currently, a network in a backbone network mainly includes an IP (Internet Protocol, Internet Protocol) and optical cross-layer network. An upper-layer service is directly carried by the IP network, and includes service encapsulation, multiservice convergence, and service route selection. In addition, data is transmitted by using the optical network. Generally, the IP network and the optical network are two independent networks and are separately managed by different operation and maintenance personnel. As a result, in a case of new service provisioning or a link fault, an operator needs the operation and maintenance personnel of the IP network and the optical network to coordinate, and establishing a new service needs to take a relatively long time. When an existing optical network cannot meet a service requirement of the IP network, a new optical path needs to be enabled, and opening a new optical path takes a relatively long time. When a link fault occurs in the optical network, the fault cannot be located rapidly. Therefore, to resolve the foregoing problems, a VNTM (Virtual Network Topology Manager, virtual network topology manager) concept is provided in the prior art. Efficiency of opening a new service is improved, collaborative restoration of networks is accelerated, and utilization of the entire network is improved by means of collaborative IP and optical management, and by using an SDN (Software-defined Network) network architecture and online automatic operation and maintenance.

In the IP network and the optical network, IP links share an optical layer reserved resource, and one optical link may be shared by multiple IP links at the same time. Therefore, when multiple links are established at an IP layer at the same time, because IP links share a resource, the path computation easily fails. In an existing solution, when multiple paths are computed, first an IP PCE (Path Computation Element, path computation element) performs path computation once, and after the path computation by the IP PCE fails, path computation is performed once again in combination with an optical PCE. If the path computation by the optical PCE fails, failure information is returned, and path computation is stopped. Therefore, a path computation failure easily occurs if path computation is performed by using the prior art. Even if there is an available path in the network, the available path cannot be computed, thereby reducing resource utilization of the entire network.

In EP 2 843 888 A1 a centralized controller provides dynamic end-to-end network path setup across multiple network layers. In particular, the centralized controller manages end-to-end network path setup that provisions a path at both the transport network layer (e.g., optical) and the service network layer (e.g., IP/MPLS). The centralized controller performs path computation for an optical path at the transport network layer and for a path at the service network layer that transports network traffic on the underlying optical transport path, based on information obtained by the centralized controller from the underlying network components at both layers.

Embodiments of EP 2 658 149 A1 disclose a network recovery method and apparatus. The method includes: when a fault occurs in an optical layer of a network, acquiring a network state and available resources in the network; where the available resources include idle resources in the optical layer and in an IP layer, and an intact resource in an optical layer LSP in which a fault occurs and an intact resource in an IP link corresponding to the LSP; according to the network state and by using the available resources, computing path information of a new optical layer LSP, a corresponding IP link, and configuration information corresponding to source and destination nodes of the IP link; instructing a source node of the new optical layer LSP to establish the optical layer LSP according to the path information of the new optical layer LSP; and after the optical layer LSP is successfully established, instructing the source and destination nodes of the IP link corresponding to the optical layer LSP to establish the IP link, and delivering, to the source and destination nodes, configuration information corresponding to them.

Cholda, P., et. al. in "Recovery and Its Quality in Multilayer Networks", Journal of Lightwave Technology, IEEE Service Center, New York, NY, US, present a tutorial on multilayer recovery methods. Emphasis is laid not on their procedural operation, but rather on their qualityassessment and differentiation based on reliability parameters (e.g., availability, recovery time) and other relevant features (e.g., affected traffic, state overhead). A brief outline of terminology related to multilayer networks is given. Then, an overview of recovery methods is presented, with focus on multilayer recovery. Next, quality features enabling assessment of multilayer recovery are given along with general approaches to service differentiation based on resilience.

### SUMMARY

Embodiments of the present invention provide a method and an apparatus for path computation in a network, which can improve network resource utilization.

According to a first aspect, an embodiment of the present invention provides a method for path computation in a network, including:
if an Internet Protocol path computation element IP PCE fails to perform path computation in an IP network, triggering an optical PCE to perform path computation in an optical network;
if the optical PCE fails to perform path computation in the optical network, returning, by the optical PCE, optical network collision resource group information to the IP PCE; and
recomputing, by the IP PCE, a path from a source node to a destination node according to the optical network collision resource group information.

With reference to the first aspect, in a first possible implementation manner of the first aspect, the optical network collision resource group information includes at least one of a label switching router identity LSR ID of the source node, an LSR ID of the destination node, or shared resource collision group information SRcLG.

With reference to the first aspect or the first possible implementation manner of the first aspect, in a second possible implementation manner of the first aspect, the recomputing a path from a source node to a destination node further includes:
recording duration of the path recomputation, where when the duration of the path recomputation is greater than a first preset value, the path computation fails; or
recording a quantity of path recomputation times, where when the quantity of path recomputation times is greater than a second preset value, the path computation fails.

With reference to the first aspect or either one of the first and the second possible implementation manners of the first aspect, in a third possible implementation manner of the first aspect, after the triggering an optical PCE to perform path computation in an optical network, the method further includes:
if the optical PCE succeeds in performing path computation, returning a path computation success message to the IP PCE; and
establishing, by the IP PCE, a correspondence between an IP link and an optical link according to the path computation success message, and establishing the path from the source node to the destination node.

With reference to the first aspect or any one of the first to the third possible implementation manners of the first aspect, in a fourth possible implementation manner of the first aspect, the triggering an optical PCE to perform path computation in an optical network further includes:
triggering, by the IP PCE by using a virtual network topology manager VNTM, the optical PCE to perform path computation in the optical network; and
returning, by the optical PCE, the optical network collision resource group information to the IP PCE by using the VNTM.

According to a second aspect, an embodiment of the present invention provides an apparatus for path computation in a network, including:
a second computation unit, configured to: if a first computation unit fails to perform path computation in an IP network, perform, by the second computation unit, path computation in an optical network;
a first sending unit, configured to: if the second computation unit fails to perform path computation in the optical network, return, by the second computation unit, optical network collision resource group information to the first computation unit, where
the first computation unit is further configured to recompute a path from a source node to a destination node according to the optical network collision resource group information.

With reference to the second aspect, in a first possible implementation manner of the second aspect, the optical network collision resource group information includes at least one of a label switching router identity LSR ID of the source node, an LSR ID of the destination node, or shared resource collision group information SRcLG.

With reference to the second aspect or the first possible implementation manner of the second aspect, in a second possible implementation manner of the second aspect, the apparatus further includes:
a recording unit, configured to record duration of the path recomputation, where when the duration of the path recomputation is greater than a first preset value, the path computation fails; or
the recording unit, configured to record a quantity of path recomputation times, where when the quantity of path recomputation times is greater than a second preset value, the path computation fails.

With reference to the second aspect or either one of the first and the second possible implementation manners of the second aspect, in a third possible implementation manner of the second aspect, the apparatus further includes:
a second sending unit, configured to: if the second computation unit succeeds in performing path computation, return a path computation success message to the first computation unit; and
a path establishment unit, configured to: establish a correspondence between an IP link and an optical link according to the path computation success message, and establish the path from the source node to the destination node.

With reference to the second aspect or any one of the first to the third possible implementation manners of the second aspect, in a fourth possible implementation manner of the second aspect,
the first computation unit triggers, by using a virtual network topology manager VNTM, the second computation unit to perform path computation in the optical network; and
the second computation unit returns the optical network collision resource group information to the first computation unit by using the VNTM.

According to a third aspect, an embodiment of the present invention provides a system for path computation in a network, where the system includes at least an Internet Protocol path computation element IP PCE and an optical PCE, where
the optical PCE is configured to: if the Internet Protocol path computation element IP PCE fails to perform path computation in an IP network, perform path computation in an optical network;
the optical PCE is further configured to: if the optical PCE fails to perform path computation in the optical network, return optical network collision resource group information to the IP PCE; and
the IP PCE is configured to recompute a path from a source node to a destination node according to the optical network collision resource group information.

With reference to the third aspect, in a first possible implementation manner of the third aspect, the optical network collision resource group information returned by the optical PCE to the IP PCE includes at least an LSR ID of the source node, an LSR ID of the destination node, and SRcLG. With reference to the third aspect or the first possible implementation manner of the third aspect, in a second possible implementation manner of the third aspect,
duration of the path recomputation is recorded, and when the duration of the path recomputation is greater than a first preset value, the path computation fails; or
a quantity of path recomputation times is recorded, and when the quantity of path recomputation times is greater than a second preset value, the path computation fails.

With reference to the third aspect or either one of the first and the second possible implementation manners of the third aspect, in a third possible implementation manner of the third aspect,
the optical PCE is further configured to: if the path computation succeeds, return a path computation success message to the IP PCE; and
the IP PCE is further configured to: establish a correspondence between an IP link and an optical link according to the path computation success message, and establish the path from the source node to the destination node.

With reference to the third aspect or any one of the first to the third possible implementation manners of the third aspect, in a fourth possible implementation manner of the third aspect, the system further includes a virtual network topology manager VNTM, where
the VNTM is configured to be used by the IP PCE to trigger the optical PCE to perform path computation in the optical network; and
the VNTM is further configured to be used by the optical PCE to return the optical network collision resource group information to the IP PCE.

Embodiments of the present invention provide a method, an apparatus, and a system for path computation in a network, where an IP PCE first computes a path from a source node to a destination node in an IP network; when the IP PCE fails to perform path computation in the IP network, an optical PCE performs path computation in an optical network; when the optical PCE fails to perform path computation in the optical network, the optical PCE returns optical network collision resource group information to the IP PCE; and the IP PCE recomputes the path from the source node to the destination node according to the optical network collision resource group information. Compared with the prior-art method in which path computation is performed only once in the IP network and the optical network, and computation of a path from the source node to the destination node easily fails, in technical solutions of the present invention, after the path computation in the optical network fails, the optical network collision resource group information is further returned to the IP PCE of the IP network, and the IP PCE performs path recomputation according to the optical network collision resource group information, which can ensure that IP service path computation succeeds when there are sufficient optical layer resources, and can improve network resource utilization.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1a is a schematic diagram of a network topology scenario according to an embodiment of the present invention;
FIG. 1b is a schematic diagram of another network topology scenario according to an embodiment of the present invention;
FIG. 2 is a flowchart of a method for path computation in a network according to an embodiment of the present invention;
FIG. 3 is a schematic diagram of a topology according to an embodiment of the present invention;
FIG. 4a is a schematic diagram of a correspondence between an IP network and an optical network according to an embodiment of the present invention;
FIG. 4b is a schematic diagram of another correspondence between an IP network and an optical network according to an embodiment of the present invention;
FIG. 5 is a flowchart of another method for path computation in a network according to an embodiment of the present invention;
FIG. 6 is a flowchart of another method for path computation in a network according to an embodiment of the present invention;
FIG. 7 is a flowchart of another method for path computation in a network according to an embodiment of the present invention;
FIG. 8 is a schematic composition diagram of an apparatus for path computation in a network according to an embodiment of the present invention;
FIG. 9 is a schematic composition diagram of another apparatus for path computation in a network according to an embodiment of the present invention;
FIG. 10 is a schematic composition diagram of another apparatus for path computation in a network according to an embodiment of the present invention;
FIG. 11 is a schematic composition diagram of another apparatus for path computation in a network according to an embodiment of the present invention; and
FIG. 12 is a schematic composition diagram of a system for path computation in a network according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

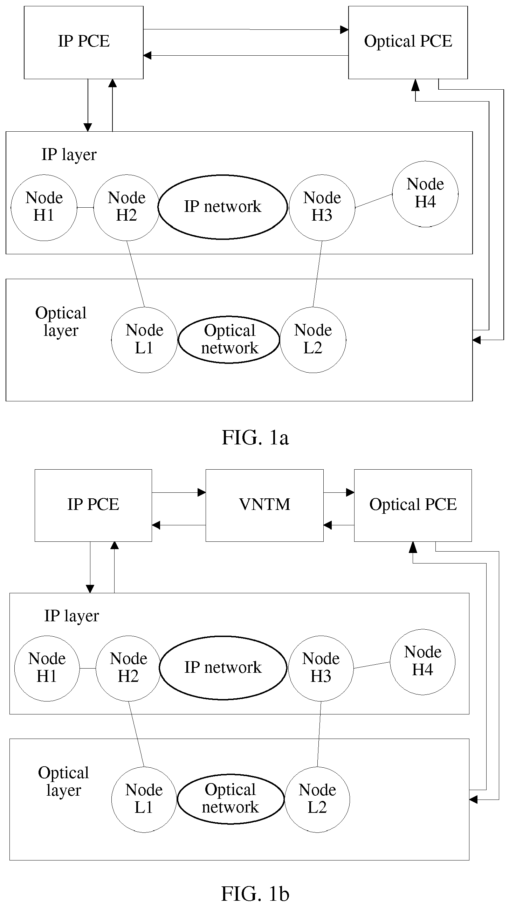

An embodiment of the present invention provides a method for path computation in a network, applied to an IP and optical cross-layer network architecture. As shown in FIG. 1a, The network architecture includes an IP network, an optical network, an IP PCE, and an optical PCE. The optical network includes physical resources such as a fiber and an optical network device, to provide a statically-configured physical link resource for an IP layer. The IP network includes an IP link and multiple nodes, used to carry an upper-layer service. The PCE is a functional entity in a network and specially responsible for path computation, and the PCE may be located anywhere in the network, may be integrated within a network device, or may be an independent device. A PCE located at an IP layer is an IP PCE, and a PCE located at an optical layer is an optical PCE. Based on a known network architecture and a constraint, the PCE computes, according to an existing path and a path computation request, an optimal path meeting the constraint. The constraint includes a static constraint, such as an inter-router node distance, a bandwidth, or a line capacity of an optical network device, and further includes a dynamic constraint, such as a network fault status, or network congestion information.

With reference to the network architecture shown in FIG. 1a, that the IP layer and the optical layer have respective PCEs is described. If a path from H1 to H4 of the IP layer is to be established, the following procedure is performed:
Step 1: H1 sends, to an IP PCE, a request for computing a path from H1 to H4.
Step 2: The IP PCE respectively selects H2 and H3 as an ingress and an egress to enter and exit an optical network.
Step 3: The IP PCE requests an optical PCE to compute a path from H2 to H3.
Step 4: The optical PCE returns a path of H2-L1-L2-H3 to the IP PCE.
Step 5: The IP PCE returns a path of H1-H2-L1-L2-H3-H4 to H1.

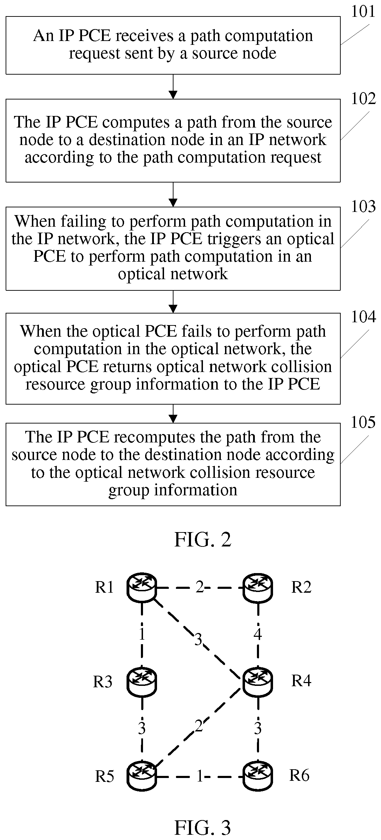

The IP PCE and the optical PCE may further perform collaborative management by using a VNTM, as shown in FIG. 2b. For example, when the optical PCE fails to perform path computation in the optical network, the optical PCE feeds back optical network collision resource group information to the VNTM. The VNTM sends the optical network collision resource group information to the IP PCE, and the IP PCE performs path recomputation according to the optical network collision resource group information.

The following uses a network architecture corresponding to FIG. 1a as an example, to describe in detail how the method of the present invention is specifically implemented based on the network architecture in FIG. 1a, as shown in FIG. 2, including:
101: A source node sends a path computation request to an IP PCE.

Before a service connection is established between the source node and a destination node, the source node sends a path computation request to the IP PCE, to request the IP PCE to compute a connection path between the source node and the destination node, so that the source node establishes a connection to the destination node. The path computation request sent by the source node to the IP PCE includes an LSR (Label Switching Router, label switching router) ID (Identity, identity) of the destination node, where the LSR ID of the destination node is used to identify the destination node. The path computation request may further include an LSR ID of the source node, where the LSR ID of the source node is used to identify the source node.

102: The IP PCE computes a path from the source node to the destination node in an IP network according to the path computation request.

As shown in FIG. 3, the network includes six network nodes: R1, R2, R3, R4, R5, and R6. If the source node is R1, the source node needs to establish a connection to the destination node R5, and the IP PCE starts performing path computation according to the path computation request sent by the source node. The path computed by the IP PCE may be R1-R3-R5, may be R1-R4-R5, or may be a path passing through another intermediate node to R5, which is not listed one by one for description herein.

103: When failing to perform path computation in the IP network, the IP PCE triggers an optical PCE to perform path computation in an optical network.

As shown in FIG. 3, the IP PCE fails to perform path computation in the IP network. When two or more than two services, for example, a service 1 and a service 2, simultaneously need to establish a service connection between R1 and R2, the IP PCE first computes a path from R1 to R2, being R1-R2. However, when a bandwidth of only 5 G can be provided between R1 and R2, and the service 1 needs a bandwidth of only 5 G to transmit data, because no bandwidth remains between R1 and R2, the service 2 cannot continue using the path from R1 directly to R2 to transmit data. Therefore, for the service 2, when the IP PCE performs path computation between R1 and R2, the path computation fails. In this case, when the service 2 needs to establish a path from R1 to R2, the optical PCE is triggered to compute the path from R1 to R2 in the optical network. As shown in FIG. 3, links with a same reference sign represent that the links use a same optical network resource. It is assumed that a live network service is: a service 1: R1 to R3, 5 G; and a service 2: R1 to R6, 6 G. A bandwidth of a link from R1 to R3 on the IP layer is 10 G. The service 1 and the service 2 need to occupy a link bandwidth of 11 G in total. Therefore, when the service 2 implements the connection from R1 to R6 by using the path R1-R3-R5-R6, resources of the link from R1 to R3 on the IP layer are insufficient and cannot simultaneously meet requirements of the service 1 and the service 2 for bandwidth use, and a new underlying optical path needs to be added. For a live network topology resource, a same underlying optical path resource is used, that is, R1-R3 and R5-R6 use a same underlying optical path resource, and R1-R4, R3-R5, and R4-R6 use a same underlying optical path resource. Therefore, when a path of the service 1 that is computed by the IP PCE is R1-R3, and a path of the service 2 is R1-R3-R5-R6, because the service 2 also uses a same path R1-R3 as that of the service 1, and R1-R3 can provide a link bandwidth of only 10 G, for the service 1 of 5 G and the service 2 of 6 G, the bandwidth provided by R1-R3 cannot meet the requirements of both the service 1 and the service 2, and the path computation fails. If the path of the service 1 is R1-R3, and the path of the service 2 is R1-R2-R4-R6, the path computation may succeed.

104: When the optical PCE fails to perform path computation in the optical network, the optical PCE returns optical network collision resource group information to the IP PCE.

The optical network collision resource group information includes link information of the optical network, such as a bandwidth, an MTU (Maximum Transmission Unit, maximum transmission unit), link penalty information, a delay, a hop count, SRLG (Shared Risk Link Group, shared risk link group), and SRcLG. In this manner, when the IP PCE performs path computation, the IP PCE not only can acquire general information such as a bandwidth occupied by the path on the underlying optical path resource, link penalty information, a hop count, and an SRLG, but also can learn collision information between paths by using SRcLG information. FIG. 3 is used as an example. When the service 1 transmits data by using R1-R3-R5, and the service 2 performs service transmission by using R1-R4, because R3-R5 and R1-R4 use a same optical network resource, R1-R4 and R3-R5 are a shared risk link group. In addition, SRcLG is shared resource collision group information, for example, relay or wavelength collision information of the optical network.

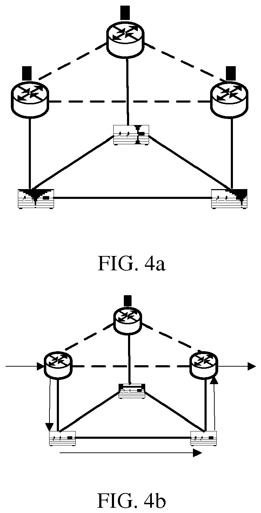

It should be noted that the path computation failure in the optical network generally means that an optical path already carries multiple services and cannot carry any new service. Information about each optical network link changes with a change of the service. As shown in FIG. 3, R1-R3 and R5-R6 use a same underlying optical path. Therefore, when services of R1-R3 increase, a service of R5-R6 is affected. A bandwidth is reduced, a delay is increased, a hop count increases, or the like. When these pieces of information cannot meet a requirement of a new service, the path computation fails in the optical network. As shown in FIG. 4a, in FIG. 4a, entities connected by upper dashed lines form an IP network, and entities connected by lower solid lines form an optical network. When each router in the IP network has one idle port (black blocks shown in FIG. 4a) left, optical links are all accessible, referring to the part obtained through connection by the solid lines in FIG. 4a. As shown in FIG. 4b, in FIG. 4b, entities connected by upper dashed lines form an IP network, and entities connected by lower solid lines form an optical network. When an idle port (the black block shown in FIG. 4b) of a router in the IP network is occupied (the solid line with an arrow in FIG. 4b), optical links shown in FIG. 4 are all unreachable. In this case, path computation fails in an optical PCE.

105: The IP PCE recomputes a path from the source node to the destination node according to the optical network collision resource group information.

In a process in which the IP PCE performs path recomputation, reference is made to the collision resource group information returned by the optical PCE, so as to avoid reusing a key link resource. A specific method for recomputation may be performing computation by using a complete separation algorithm. For example, the existing service 1 and service 2 need to perform path computation. For the service 1, path computation is performed in an original topology, and a new topology is formed after a router through which the path established by the service 1 passes is deleted; and for service 2, a second path is computed in the new topology. Another path recomputation method may be prohibiting a path computed by the service 1, and then computing a path of the service 2.

It should be further noted that in the process in which the IP PCE performs path recomputation according to the optical network collision resource group information, if a feedback result in the information is information indicating that a bandwidth of a link is less than a bandwidth of another link, or the delay is too high, or the like, then in the path recomputation process, a link that conforms to the foregoing case is not used as a new link to perform path computation. That is, according to the optical network collision resource group information, when the IP PCE performs path recomputation, some paths with a high path computation failure probability are excluded, thereby improving a path recomputation success probability.

This embodiment of the present invention provides a method for path computation in a network, where an IP PCE first computes a path from a source node to a destination node in an IP network; when the IP PCE fails to perform path computation in the IP network, an optical PCE performs path computation in an optical network; when the optical PCE fails to perform path computation in the optical network, the optical PCE returns optical network collision resource group information to the IP PCE; and the IP PCE recomputes the path from the source node to the destination node according to the optical network collision resource group information. In the technical solution of the present invention, after the optical network fails to perform path computation, the optical network further returns the optical network collision resource group information to the IP PCE of the IP network, and the IP PCE performs path recomputation according to the optical network collision resource group information, which can ensure that IP service path computation succeeds when there are sufficient optical resources, and can improve network resource utilization.

In another embodiment provided in the present invention, content of the optical network collision resource group information returned by the optical PCE to the IP PCE is described in detail. The optical network collision resource group information may include an LSR of a source node (Label Switching Router, label switching router) ID (Identity, identity), an LSR ID of a destination node, and SRcLG.

One or more paths from the source node to the destination node may be determined by using the LSR ID of the source node and the LSR ID of the destination node. The SRcLG includes an optical relay that is passed through when path computation previous to current path computation is performed, or wavelength collision information, or both. In addition to the foregoing information, the SRcLG may further include an OSNR (Optical Signal Noise Ratio, optical signal noise ratio) value. Because the IP PCE performs path recomputation according to the collision resource group information returned by the optical PCE, the IP PCE is enabled to obtain as much optical path resource information as possible, so that the IP PCE can avoid reusing a key link resource when performing path recomputation, thereby increasing a path computation success probability by the IP PCE.

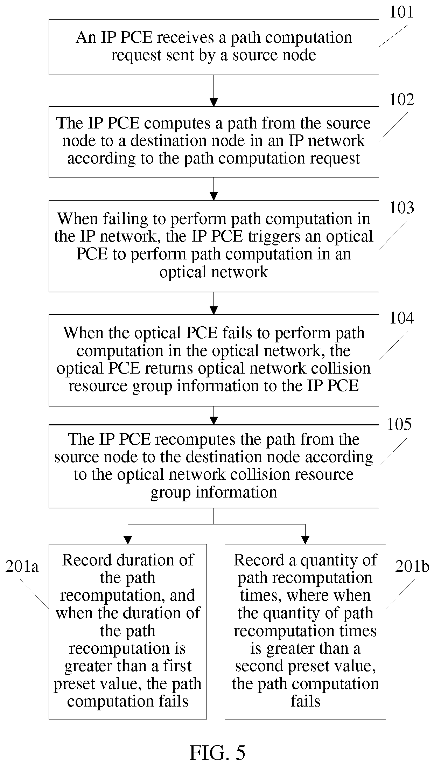

In another embodiment provided in the present invention, as shown in FIG. 5, to avoid an infinite loop when an IP PCE cannot perform path computation successfully and keeps performing computation, an egress condition is set. After the egress condition is met, the path computation is stopped. After step 105 is performed, when an optical PCE also fails to perform path computation, the optical PCE returns collision resource group information to the IP PCE, so that the IP PCE performs path recomputation according to the optical PCE. After the execution process, the path computation is stopped only in a case in which the path computation succeeds. Therefore, in the path computation process, if the path computation does not succeed all the time, a process of infinite loop is entered, and a PCE resource is occupied. Therefore, an egress condition needs to be set, to avoid the foregoing cases, specifically including:
201a: Record duration of the path recomputation, where when the duration of the path recomputation is greater than a first preset value, the path computation fails.

For example, when the duration of the path recomputation reaches one minute and the path computation still does not succeed, the loop is stopped after the current path computation is completed. It is considered that the current path computation fails, and path computation failure information is returned. Specifically, recomputation duration may be counted by using a timer. After the recomputation is completed, it is determined whether the duration recorded by the timer is greater than the first preset value.

201b: Record a quantity of path recomputation times, where when the quantity of path recomputation times is greater than a second preset value, the path computation fails.

For example, when the quantity of times of recomputation reaches five times, and the path computation still does not succeed, the loop is stopped. It is considered that the current path computation fails, and path computation failure information is returned. Specifically, the quantity of times of recomputation may be counted by using a counter. Each time recomputation is performed, the counter is incremented by 1. After the recomputation is completed, it is determined whether the quantity of times recorded by the counter is greater than the second preset value.

Specific values of the foregoing two cases of stopping may be set according to an actual situation, which is not limited in this embodiment of the present invention.

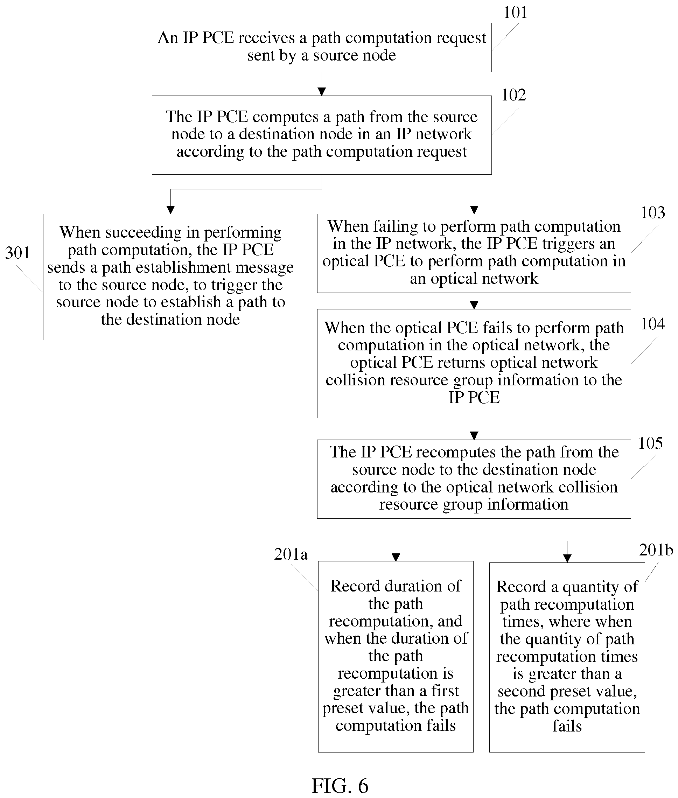

In another embodiment provided in the present invention, a process in which the path between the source node and the destination node is established in the IP network after the IP PCE succeeds in performing path computation is further described, as shown in FIG. 6, specifically including:
301: When succeeding in performing path computation, the IP PCE sends a path establishment message to the source node, to trigger the source node to establish a path to the destination node. Information needed by each path specifically includes a path attribute and an IP service attribute. The path attribute includes an LSR ID of a source node, an LSR ID of a destination node, a tunnel (tunnel) ID, a bandwidth (Bps), a VNTM path type (a service path or a protection path), and the like. The IP attribute includes a source node IP + mask, a destination node IP + mask, a bandwidth, an MTU, link penalty information, and the like of the VNTM path.

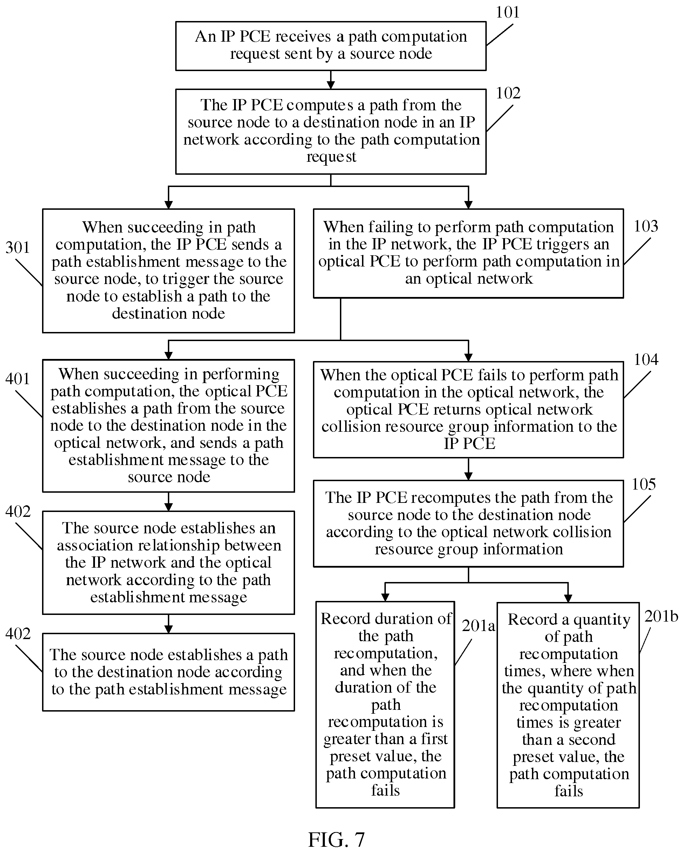

In another embodiment provided in the present invention, a process in which the path from the source node to the destination node is established after the optical IP PCE succeeds in performing path computation is further described, as shown in FIG. 7, specifically including:
401: If succeeding in performing path computation, the optical PCE returns a path computation success message to the IP PCE.

After succeeding in performing path computation, the optical PCE returns a path computation success message, where the path computation success message includes specific link information. The specific link information is optical physical link information, which includes at least an LSR ID of a source node, an LSR ID of a destination node, link penalty information of an optical link, SRLG information, and the like.

It should be noted that in a conventional backbone network, IP traffic is carried on a core router. When network traffic is relatively small, a router may implement traffic convergence in a manner of statistical multiplexing. However, as the network traffic increases, the core router is under the pressure of capacity expansion. In IP traffic passing through the core router, 50% to 60% of the traffic only needs to be forwarded and does not need to be processed by the IP layer. Therefore, a large amount of router resources are wasted. The traffic is forwarded by the router multiple times, and a large amount of router ports are consumed. When no router port may be used, an IP PCE fails to perform path computation. In this case, an OTN (Optical Transport Network, optical transport network) port used by an optical layer and a router port used by an IP layer do not conflict. Therefore, after the IP PCE fails to perform path computation on the IP layer, the optical PCE may perform path computation on the optical layer.

402: The IP PCE establishes a correspondence between an IP link and an optical link according to the path computation success message, and triggers the source node to establish the path from the source node to the destination node.

After receiving the path computation success message returned by the optical PCE, the IP PCE sets a corresponding binding interface, that is, establishes the correspondence between the optical link and the IP link, and finally floods the link to the IP PCE by using an IGP (Interior Gateway Protocol, Interior Gateway Protocol). The IP PCE updates TEDB (Traffic Engineering Database, traffic engineering database) information in a flooding manner by using the IGP, determines that a correspondingly established optical link has been established, and returns path computation success information to the source node. After receiving the path computation success information, the source node establishes a link to the destination node. It should be noted that both the source node and the destination node are nodes in the IP network.

It should be noted that the foregoing step 101 to step 402 may further be performed in a network architecture having a VNTM. As shown in FIG. 1b, in the network architecture, an IP PCE sends, by using the VNTM, a request to perform path computation on an optical layer to an optical PCE, and the optical PCE returns optical network collision resource group information to the IP PCE by using the VNTM. The IP PCE and the optical PCE exchange information by using the VNTM. The steps in the foregoing embodiment of the present invention may also be used in a specific implementation method thereof. Details are not described herein again.

This embodiment of the present invention provides a method for path computation in a network, where an IP PCE first computes a path from a source node to a destination node in an IP network; when the IP PCE fails to perform path computation in the IP network, an optical PCE performs path computation in an optical network; when the optical PCE fails to perform path computation in the optical network, the optical PCE returns optical network collision resource group information to the IP PCE; and the IP PCE recomputes the path from the source node to the destination node according to the optical network collision resource group information. In the technical solution of the present invention, after the optical network fails to perform path computation, the optical network further returns the optical network collision resource group information to the IP PCE of the IP network, and the IP PCE performs path recomputation according to the optical network collision resource group information, which can ensure that IP service path computation succeeds when there are sufficient optical resources, and can improve network resource utilization.

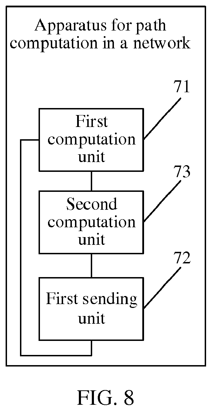

An embodiment of the present invention provides an apparatus for path computation in a network. As shown in FIG. 8, the apparatus includes:
a second computation unit 73, configured to: if a first computation unit 71 fails to perform path computation in an IP network, perform, by the second computation unit 73, path computation in an optical network;
a first sending unit 72, configured to: if the second computation unit 73 fails to perform path computation in the optical network, return, by the second computation unit 73, optical network collision resource group information to the first computation unit 71, where
the first computation unit 71 is further configured to recompute a path from a source node to a destination node according to the optical network collision resource group information.

In another embodiment provided in the present invention, the optical network collision resource group information returned by the second computation unit to the first computation unit includes at least an LSR ID of the source node, an LSR ID of the destination node, and SRcLG.

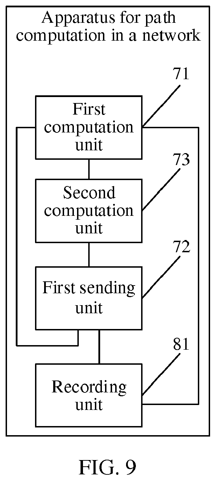

In another optional compositional manner of the apparatus, as shown in FIG. 9, the apparatus further includes:
a recording unit 81, configured to record duration of the path recomputation, where when the duration of the path recomputation is greater than a first preset value, the path computation fails; or
the recording unit 81, configured to record a quantity of path recomputation times, where when the quantity of path recomputation times is greater than a second preset value, the path computation fails.

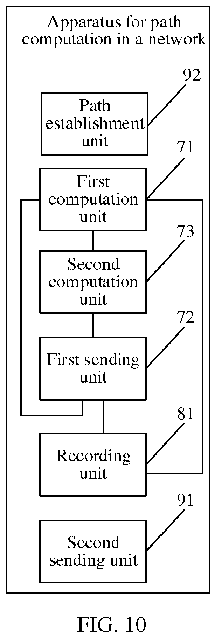

In another optional compositional manner of the apparatus, as shown in FIG. 10, the apparatus further includes:
a second sending unit 91, configured to: if the second computation unit 73 succeeds in performing path computation, return a path computation success message to the first computation unit 71; and
a path establishment unit 92, configured to: establish a correspondence between an IP link and an optical link according to the path computation success message, and establish the path from the source node to the destination node.

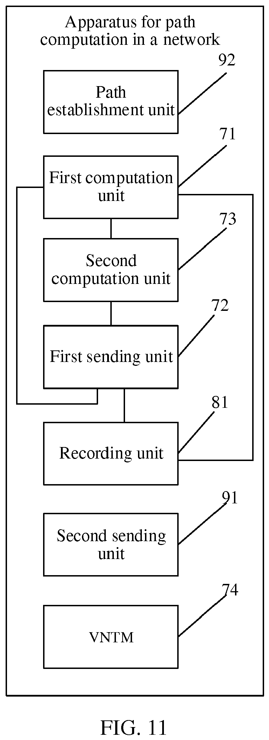

In another optional compositional manner of the apparatus, as shown in FIG. 11, the apparatus further includes: a VNTM 74, where
the first computation unit 71 triggers, by using the virtual network topology manager VNTM 74, the second computation unit 73 to perform path computation in the optical network; and
the second computation unit 73 returns the optical network collision resource group information to the first computation unit by using the VNTM.

This embodiment of the present invention provides an apparatus for path computation in a network, where an IP PCE first computes a path from a source node to a destination node in an IP network; when the IP PCE fails to perform path computation in the IP network, an optical PCE performs path computation in an optical network; when the optical PCE fails to perform path computation in the optical network, the optical PCE returns optical network collision resource group information to the IP PCE; and the IP PCE recomputes the path from the source node to the destination node according to the optical network collision resource group information. Compared with the prior-art method in which path computation is performed only once in the IP network and the optical network, and computation of a path from the source node to the destination node easily fails, in the technical solution of the present invention, after the path computation in the optical network fails, the optical network collision resource group information is further returned to the IP PCE of the IP network, and the IP PCE performs path recomputation according to the optical network collision resource group information, which can ensure that IP service path computation succeeds when there are sufficient optical layer resources, and can improve network resource utilization.

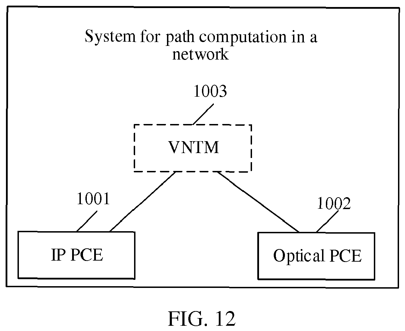

In another embodiment of the present invention, a system for path computation in a network is further provided. As shown in FIG. 12, the system includes at least an Internet Protocol path computation element IP PCE 1001 and an optical PCE 1002, where
the optical PCE 1002 is configured to: if the IP PCE 1001 fails to perform path computation in an IP network, perform path computation in an optical network;
the optical PCE 1002 is further configured to: if the optical PCE 1002 fails to perform path computation in the optical network, return optical network collision resource group information to the IP PCE 1001; and
the IP PCE 1001 is configured to recompute a path from a source node to a destination node according to the optical network collision resource group information.

In another embodiment of the present invention, as shown in FIG. 12, the optical network collision resource group information returned by the optical PCE to the IP PCE includes at least an LSR ID of the source node, an LSR ID of the destination node, and SRcLG.

In another embodiment of the present invention, as shown in FIG. 12,
duration of the path recomputation is recorded, and when the duration of the path recomputation is greater than a first preset value, the path computation fails; or
a quantity of path recomputation times is recorded, and when the quantity of path recomputation times is greater than a second preset value, the path computation fails.

In another embodiment of the present invention, as shown in FIG. 12,
the optical PCE 1002 is further configured to: if the path computation succeeds, return a path computation success message to the IP PCE 1001; and
the IP PCE 1001 is further configured to: establish a correspondence between an IP link and an optical link according to the path computation success message, and establish the path from the source node to the destination node.

In another embodiment of the present invention, as shown in FIG. 12, the system further includes a VNTM 1003, where
the VNTM 1003 is configured to be used by the IP PCE 1001 to trigger the optical PCE to perform path computation in the optical network; and
the VNTM 1003 is further configured to be used by the optical PCE 1002 to return the optical network collision resource group information to the IP PCE 1001.

This embodiment of the present invention provides a system for path computation in a network, where an IP PCE first computes a path from a source node to a destination node in an IP network; when the IP PCE fails to perform path computation in the IP network, an optical PCE performs path computation in an optical network; when the optical PCE fails to perform path computation in the optical network, the optical PCE returns optical network collision resource group information to the IP PCE; and the IP PCE recomputes the path from the source node to the destination node according to the optical network collision resource group information. Compared with the prior-art method in which path computation is performed only once in the IP network and the optical network, and computation of a path from the source node to the destination node easily fails, in the technical solution of the present invention, after the path computation in the optical network fails, the optical network collision resource group information is further returned to the IP PCE of the IP network, and the IP PCE performs path recomputation according to the optical network collision resource group information, which can ensure that IP service path computation succeeds when there are sufficient optical layer resources, and can improve network resource utilization.

The embodiments in this specification are all described in a progressive manner, for same or similar parts in the embodiments, reference may be made to these embodiments, and each embodiment focuses on a difference from other embodiments. Especially, a device embodiment is basically similar to a method embodiment, and therefore is described briefly; for related parts, reference may be made to partial descriptions in the method embodiment.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for path computation in a network, comprising:
if an Internet Protocol, IP, path computation element, PCE, fails to perform path computation in an IP network, triggering (103) an optical PCE to perform path computation in an optical network;
if the optical PCE fails to perform path computation in the optical network, returning (104), by the optical PCE, optical network collision resource group information to the IP PCE; and
recomputing (105), by the IP PCE, a path from a source node to a destination node according to the optical network collision resource group information.

2. The method according to claim 1, wherein the optical network collision resource group information comprises at least one of a label switching router identity, LSR ID, of the source node, an LSR ID of the destination node, or shared resource collision group information, SRcLG.

3. The method according to claim 1 or 2, wherein the recomputing (105) a path from a source node to a destination node further comprises:
recording duration of the path recomputation (201a), wherein when the duration of the path recomputation is greater than a first preset value, the path recomputation fails; or
recording a quantity of path recomputation times (201b), wherein when the quantity of path recomputation times is greater than a second preset value, the path recomputation fails.

4. The method according to claim 1, after the triggering (103) an optical PCE to perform path computation in an optical network, further comprising:
if the optical PCE succeeds in performing path computation, returning a path computation success message to the IP PCE (401); and
establishing, by the IP PCE, a correspondence between an IP link and an optical link according to the path computation success message, and establishing the path from the source node to the destination node (402).

5. The method according to any one of claims 1 to 4, wherein the triggering (103) an optical PCE to perform path computation in an optical network further comprises:
triggering, by the IP PCE by using a virtual network topology manager, VNTM, the optical PCE to perform path computation in the optical network; and
returning, by the optical PCE, the optical network collision resource group information to the IP PCE by using the VNTM.

6. An apparatus for path computation in a network, comprising:
a second computation unit (73), configured to: if a first computation unit (71) fails to perform path computation in an Internet Protocol, IP, network, perform path computation in an optical network;
a first sending unit (72), configured to: if the second computation unit (73) fails to perform path computation in the optical network, return optical network collision resource group information to the first computation unit (71), wherein
the first computation unit (71) is configured to recompute a path from a source node to a destination node according to the optical network collision resource group information.

7. The apparatus according to claim 6, wherein the optical network collision resource group information comprises at least one of a label switching router identity, LSR ID, of the source node, an LSR ID of the destination node, or shared resource collision group information, SRcLG.

8. The apparatus according to claim 6 or 7, further comprising:
a recording unit (81), configured to record duration of the path recomputation, wherein when the duration of the path recomputation is greater than a first preset value, the path recomputation fails; or
record a quantity of path recomputation times, wherein when the quantity of path recomputation times is greater than a second preset value, the path recomputation fails.

9. The apparatus according to claim 6, wherein the apparatus further comprises:
a second sending unit (91), configured to: if the second computation unit (73) succeeds in performing path computation, return a path computation success message to the first computation unit (71); and
a path establishment unit (92), configured to: establish a correspondence between an IP link and an optical link according to the path computation success message, and establish the path from the source node to the destination node.

10. The apparatus of any one of claims 6 to 9, further comprising a virtual network topology manager, VNTM (74):
the first computation unit (71) is configured to trigger, by using the VNTM (74), the second computation unit (71) to perform path computation in the optical network; and
the second computation unit (73) is configured to return the optical network collision resource group information to the first computation unit by using the VNTM (74).

11. A system for path computation in a network, wherein the system comprises at least an Internet Protocol, IP, path computation element (1001), PCE, and an optical PCE(1002), wherein
the optical PCE is configured to: if the IP PCE (1001) fails to perform path computation in an IP network, perform path computation in an optical network;
the optical PCE (1002) is further configured to: if the optical PCE (1002) fails to perform path computation in the optical network, return optical network collision resource group information to the IP PCE (1001); and
the IP PCE (1001) is configured to recompute a path from a source node to a destination node according to the optical network collision resource group information.

12. The system according to claim 11, wherein the optical network collision resource group information returned by the optical PCE (1002) to the IP PCE (1002) comprises at least an LSR ID of the source node, an LSR ID of the destination node, and SRcLG.

13. The system according to claim 12 further comprising a recording unit (81), wherein the recording unit is configured to
record the duration of the path recomputation and when the duration of the path recomputation is greater than a first preset value, the path recomputation fails; or record
a quantity of path recomputation times and when the quantity of path recomputation times is greater than a second preset value, the path recomputation fails.

14. The system according to claim 11, wherein
the optical PCE (1002) is further configured to: if the path computation succeeds, return a path computation success message to the IP PCE (1001); and
the IP PCE (1001) is further configured to: establish a correspondence between an IP link and an optical link according to the path computation success message, and establish the path from the source node to the destination node.

15. The system according to claim 11, wherein the system further comprises a virtual network topology manager (1003), VNTM, wherein
the VNTM (1003) is configured to be used by the IP PCE to trigger the optical PCE to perform path computation in the optical network; and
the VNTM (1003) is further configured to be used by the optical PCE (1002) to return the optical network collision resource group information to the IP PCE (1001).

## Patentansprüche

1. Verfahren zur Pfadberechnung in einem Netzwerk, umfassend:
falls ein Internetprotokoll-Pfadberechnungselement, IP-PCE, versagt, eine Pfadberechnung in einem IP-Netzwerk durchzuführen, Auslösen (103), dass ein optisches PCE eine Pfadberechnung in einem optischen Netzwerk durchführt;
falls das optische PCE versagt, eine Pfadberechnung im optischen Netzwerk durchzuführen, Zurückgeben (104), durch das optische PCE, von optischen Netzwerk-Kollisionsressourcengruppeninformationen an das IP-PCE; und
erneutes Berechnen (105), durch das IP-PCE, eines Pfads von einem Quellknoten zu einem Zielknoten in Übereinstimmung mit den optischen Netzwerk-Kollisionsressourcengruppeninformationen.

2. Verfahren nach Anspruch 1, wobei die optischen Netzwerk-Kollisionsressourcengruppeninformationen mindestens eine "Label-Switching"-Routerkennung, LSR-ID, des Quellknotens, eine LSR-ID des Zielknotens oder gemeinsam genutzte Ressourcenkollisionsgruppeninformationen, SRcLG, umfassen.

3. Verfahren nach Anspruch 1 oder 2, wobei das erneute Berechnen (105) eines Pfads von einem Quellknoten zu einem Zielknoten ferner umfasst:
Aufzeichnen einer Dauer der Pfadneuberechnung (201a), wobei die Pfadneuberechnung fehlschlägt, wenn die Dauer der Pfadneuberechnung größer als ein erster voreingestellter Wert ist; oder
Aufzeichnen einer Pfadneuberechnungszeitmenge (201b), wobei die Pfadneuberechnung fehlschlägt, wenn die Pfadneuberechnungszeitmenge größer als ein zweiter voreingestellter Wert ist.

4. Verfahren nach Anspruch 1, das nach dem Auslösen (103), dass ein optisches PCE eine Pfadberechnung in einem optischen Netzwerk durchführt, ferner umfasst:
falls das optische PCE bei der Durchführung der Pfadberechnung erfolgreich ist, Zurückgeben einer Pfadberechnungserfolgsnachricht an das IP-PCE (401); und
Einrichten, durch das IP-PCE, einer Entsprechung zwischen einer IP-Verknüpfung und einer optischen Verknüpfung in Übereinstimmung mit der Pfadberechnungserfolgsnachricht und Einrichtung des Pfads vom Quellknoten zum Zielknoten (402).

5. Verfahren nach einem der Ansprüche 1 bis 4, wobei das Auslösen (103), dass ein optisches PCE eine Pfadberechnung in einem optischen Netzwerk durchführt, ferner umfasst:
Auslösen, durch das IP-PCE unter Verwendung einer virtuellen Netzwerktopologieverwaltung, VNTM, dass das optische PCE eine Pfadberechnung im optischen Netzwerk durchführt; und
Zurückgeben, durch das optische PCE, der optischen Netzwerk-Kollisionsressourcengruppeninformationen an das IP-PCE unter Verwendung der VNTM.

6. Vorrichtung zur Pfadberechnung in einem Netzwerk, umfassend:
eine zweite Berechnungseinheit (73), die ausgelegt ist: falls eine erste Berechnungseinheit (71) versagt, eine Pfadberechnung in einem Internetprotokollnetzwerk, IP-Netzwerk, durchzuführen, eine Pfadberechnung in einem optischen Netzwerk durchzuführen;
eine erste Sendeeinheit (72), die ausgelegt ist: falls die zweite Berechnungseinheit (73) versagt, die Pfadberechnung im optischen Netzwerk durchzuführen, optische Netzwerk-Kollisionsressourcengruppeninformationen an die erste Berechnungseinheit (71) zurückzugeben, wobei
die erste Berechnungseinheit (71) ausgelegt ist, einen Pfad von einem Quellknoten zu einem Zielknoten in Übereinstimmung mit den optischen Netzwerk-Kollisionsressourcengruppeninformationen erneut zu berechnen.

7. Vorrichtung nach Anspruch 6, wobei die optischen Netzwerk-Kollisionsressourcengruppeninformationen mindestens eine "Label-Switching"-Routerkennung, LSR-ID, des Quellknotens, eine LSR-ID des Zielknotens oder gemeinsam genutzte Ressourcenkollisionsgruppeninformationen, SRcLG, umfassen.

8. Vorrichtung nach Anspruch 6 oder 7, ferner umfassend:
eine Aufzeichnungseinheit (81), die ausgelegt ist, eine Dauer der Pfadneuberechnung aufzuzeichnen, wobei die Pfadneuberechnung fehlschlägt, wenn die Dauer der Pfadneuberechnung größer als ein erster voreingestellter Wert ist; oder
eine Pfadneuberechnungszeitmenge aufzuzeichnen, wobei die Pfadneuberechnung fehlschlägt, wenn die Pfadneuberechnungszeitmenge größer als ein zweiter voreingestellter Wert ist.

9. Vorrichtung nach Anspruch 6, wobei die Vorrichtung ferner umfasst:
eine zweite Sendeeinheit (91), die ausgelegt ist: falls die zweite Berechnungseinheit (73) bei der Durchführung der Pfadberechnung erfolgreich ist, eine Pfadberechnungserfolgsnachricht an die erste Berechnungseinheit (71) zurückzugeben; und
eine Pfadeinrichtungseinheit (92), die ausgelegt ist: eine Entsprechung zwischen einer IP-Verknüpfung und einer optischen Verknüpfung in Übereinstimmung mit der Pfadberechnungserfolgsnachricht einzurichten und den Pfad vom Quellknoten zum Zielknoten einzurichten.

10. Vorrichtung nach einem der Ansprüche 6 bis 9, die ferner eine virtuelle Netzwerktopologieverwaltung, VNTM, (74) umfasst:
wobei die erste Berechnungseinheit (71) ausgelegt ist, unter Verwendung der VNTM (74) auszulösen, dass die zweite Berechnungseinheit (71) eine Pfadberechnung im optischen Netzwerk durchführt; und
die zweite Berechnungseinheit (73) ausgelegt ist, unter Verwendung der VNTM (74) die optischen Netzwerk-Kollisionsressourcengruppeninformationen an die erste Berechnungseinheit zurückzugeben.

11. System zur Pfadberechnung in einem Netzwerk, wobei das System mindestens ein Internetprotokoll-Pfadberechnungselement (1001), IP-PCE, und ein optisches PCE (1002) umfasst, wobei
das optische PCE ausgelegt ist: falls das IP-PCE (1001) versagt, eine Pfadberechnung in einem IP-Netzwerk durchzuführen, eine Pfadberechnung in einem optischen Netzwerk durchzuführen;
das optische PCE (1002) ferner ausgelegt ist: falls das optische PCE (1002) versagt, die Pfadberechnung im optischen Netzwerk durchzuführen, optische Netzwerk-Kollisionsressourcengruppeninformationen an das IP-PCE (1001) zurückzugeben; und
das IP-PCE (1001) ausgelegt ist, einen Pfad von einem Quellknoten zu einem Zielknoten in Übereinstimmung mit den optischen Netzwerk-Kollisionsressourcengruppeninformationen erneut zu berechnen.

12. System nach Anspruch 11, wobei die vom optischen PCE (1002) an das IP-PCE (1002) zurückgegebenen optischen Netzwerk-Kollisionsressourcengruppeninformationen mindestens eine LSR-ID des Quellknotens, eine LSR-ID des Zielknotens und SRcLG umfassen.

13. System nach Anspruch 12, das ferner eine Aufzeichnungseinheit (81) umfasst, wobei die Aufzeichnungseinheit ausgelegt ist, die Dauer der Pfadneuberechnung aufzuzeichnen, und die Pfadneuberechnung fehlschlägt, wenn die Dauer der Pfadneuberechnung größer als ein erster voreingestellter Wert ist; oder
eine Pfadneuberechnungszeitmenge aufzuzeichnen, und die Pfadneuberechnung fehlschlägt, wenn die Pfadneuberechnungszeitmenge größer als ein zweiter voreingestellter Wert ist.

14. System nach Anspruch 11, wobei
das optische PCE (1002) ferner ausgelegt ist: falls die Pfadberechnung erfolgreich ist, eine Pfadberechnungserfolgsnachricht an das IP-PCE (1001) zurückzugeben; und das IP-PCE (1001) ferner ausgelegt ist: eine Entsprechung zwischen einer IP-Verknüpfung und einer optischen Verknüpfung in Übereinstimmung mit der Pfadberechnungserfolgsnachricht einzurichten und den Pfad vom Quellknoten zum Zielknoten einzurichten.

15. System nach Anspruch 11, wobei das System ferner eine virtuelle Netzwerktopologieverwaltung (1003), VNTM, umfasst, wobei
die VNTM (1003) ausgelegt ist, vom IP-PCE verwendet zu werden, um auszulösen, dass das optische PCE eine Pfadberechnung im optischen Netzwerk durchführt; und die VNTM (1003) ferner ausgelegt ist, vom optischen PCE (1002) verwendet zu werden, um die optischen Netzwerk-Kollisionsressourcengruppeninformationen an das IP-PCE (1001) zurückzugeben.

## Revendications

1. Procédé de calcul de chemin dans un réseau, comprenant les étapes suivantes :
si un élément de calcul de chemin, PCE, de protocole Internet, IP, ne parvient pas à effectuer le calcul de chemin dans un réseau IP, déclencher (103) un PCE optique pour effectuer le calcul de chemin dans un réseau optique ;
si le PCE optique ne parvient pas à effectuer le calcul de chemin dans le réseau optique, renvoyer (104), par le PCE optique, les informations de groupe de ressources de collision du réseau optique au PCE IP ; et
recalculer (105), par le PCE IP, un chemin d'un noeud source à un noeud de destination conformément aux informations de groupe de ressources de collision du réseau optique.

2. Procédé selon la revendication 1, dans lequel les informations de groupe de ressources de collision de réseau optique comprennent au moins un élément parmi une identité de routeur de commutation d'étiquettes, ID LSR, du noeud source, une ID LSR du noeud de destination, ou des informations de groupe de collision de ressources partagées, SRcLG.

3. Procédé selon la revendication 1 ou la revendication 2, dans lequel le recalcul (105) d'un chemin d'un noeud source à un noeud de destination comprend en outre les étapes suivantes :
enregistrer la durée du recalcul du chemin (201a), où, lorsque la durée du recalcul du chemin est supérieure à une première valeur prédéfinie, le recalcul du chemin échoue ; ou
enregistrer une quantité de temps de recalcul de chemin (201b), où, lorsque la quantité de temps de recalcul de chemin est supérieure à une seconde valeur prédéfinie, le recalcul de chemin échoue.

4. Procédé selon la revendication 1, comprenant en outre, après le déclenchement (103) d'un PCE optique pour effectuer un calcul de chemin dans un réseau optique, les étapes suivantes :
si le PCE optique réussit à effectuer un calcul de chemin, renvoyer un message de succès de calcul de chemin au PCE IP (401) ; et
établir, par le PCE IP, une correspondance entre une liaison IP et une liaison optique conformément au message de succès de calcul de chemin, et établir le chemin du noeud source au noeud de destination (402).

5. Procédé selon l'une quelconque des revendications 1 à 4, dans lequel le déclenchement (103) d'un PCE optique pour effectuer un calcul de chemin dans un réseau optique comprend en outre les étapes suivantes :
déclencher, par le PCE IP, au moyen d'un gestionnaire de topologie de réseau virtuel, VNTM, le PCE optique pour effectuer le calcul de chemin dans le réseau optique ; et
renvoyer, par le PCE optique, les informations du groupe de ressources de collision du réseau optique au PCE IP au moyen du VNTM.

6. Appareil pour le calcul de chemin dans un réseau, comprenant :
une seconde unité de calcul (73), configurée pour : si une première unité de calcul (71) ne parvient pas à effectuer un calcul de chemin dans un réseau à protocole Internet, IP, effectuer un calcul de chemin dans un réseau optique ;
une première unité d'envoi (72), configurée pour : si la seconde unité de calcul (73) ne parvient pas à effectuer un calcul de chemin dans le réseau optique, renvoyer les informations de groupe de ressources de collision du réseau optique à la première unité de calcul (71), où
la première unité de calcul (71) est configurée pour recalculer un chemin d'un noeud source à un noeud de destination conformément aux informations de groupe de ressources de collision du réseau optique.

7. Appareil selon la revendication 6, dans lequel les informations de groupe de ressources de collision de réseau optique comprennent au moins un élément parmi une identité de routeur de commutation d'étiquettes, ID LSR, du noeud source, une ID LSR du noeud de destination, ou des informations de groupe de collision de ressources partagées, SRcLG.

8. Appareil selon la revendication 6 ou la revendication 7, comprenant en outre :
une unité d'enregistrement (81), configurée pour enregistrer la durée du recalcul du chemin, où, lorsque la durée du recalcul du chemin est supérieure à une première valeur prédéfinie, le recalcul du chemin échoue ; ou
enregistrer une quantité de temps de recalcul de chemin, où, lorsque la quantité de temps de recalcul de chemin est supérieure à une seconde valeur prédéfinie, le recalcul de chemin échoue.

9. Appareil selon la revendication 6, dans lequel l'appareil comprend en outre :
une seconde unité d'envoi (91), configurée pour : si la seconde unité de calcul (73) réussit à effectuer un calcul de chemin, renvoyer un message de succès de calcul de chemin à la première unité de calcul (71) ; et
une unité d'établissement de chemin (92), configurée pour : établir une correspondance entre une liaison IP et une liaison optique conformément au message de succès de calcul de chemin, et établir le chemin du noeud source au noeud de destination.

10. Appareil selon l'une quelconque des revendications 6 à 9, comprenant en outre un gestionnaire de topologie de réseau virtuel, VNTM (74) :
la première unité de calcul (71) est configurée pour déclencher, au moyen du VNTM (74), la seconde unité de calcul (71) pour effectuer un calcul de chemin dans le réseau optique ; et
la seconde unité de calcul (73) est configurée pour renvoyer les informations de groupe de ressources de collision du réseau optique à la première unité de calcul au moyen du VNTM (74).

11. Système de calcul de chemin dans un réseau, dans lequel le système comprend au moins un élément de calcul de chemin, PCE, de protocole Internet, IP, (1001) et un PCE optique (1002), où
le PCE optique est configuré pour : si le PCE IP (1001) ne parvient pas à effectuer le calcul de chemin dans un réseau IP, effectuer le calcul de chemin dans un réseau optique ;
le PCE optique (1002) est en outre configuré pour : si le PCE optique (1002) ne parvient pas à effectuer le calcul de chemin dans le réseau optique, renvoyer les informations de groupe de ressources de collision du réseau optique au PCE IP (1001) ; et
le PCE IP (1001) est configuré pour recalculer un chemin d'un noeud source à un noeud de destination conformément aux informations sur le groupe de ressources de collision du réseau optique.

12. Système selon la revendication 11, dans lequel les informations de groupe de ressources de collision du réseau optique renvoyées par le PCE optique (1002) au PCE IP (1002) comprennent au moins un ID LSR du noeud source, un ID LSR du noeud de destination et des SRcLG.

13. Système selon la revendication 12, comprenant en outre une unité d'enregistrement (81), dans lequel l'unité d'enregistrement est configurée pour enregistrer la durée du recalcul du chemin et, lorsque la durée du recalcul du chemin est supérieure à une première valeur prédéfinie, le recalcul du chemin échoue ; ou
enregistrer une quantité de temps de recalcul de chemin et, lorsque la quantité de temps de recalcul de chemin est supérieure à une seconde valeur prédéfinie, le recalcul de chemin échoue.

14. Système selon la revendication 11, dans lequel :
le PCE optique (1002) est en outre configuré pour : si le calcul de chemin réussit, renvoyer un message de réussite de calcul de chemin au PCE IP (1001) ; et
le PCE IP (1001) est en outre configuré pour : établir une correspondance entre une liaison IP et une liaison optique conformément au message de réussite de calcul de chemin, et établir le chemin du noeud source au noeud de destination.

15. Système selon la revendication 11, dans lequel le système comprend en outre un gestionnaire de topologie de réseau virtuel (1003), VNTM, où
le VNTM (1003) est configuré pour être utilisé par le PCE IP pour déclencher le PCE optique afin d'effectuer le calcul du chemin dans le réseau optique ; et
le VNTM (1003) est en outre configuré pour être utilisé par le PCE optique (1002) pour renvoyer les informations de groupe de ressources de collision du réseau optique au PCE IP (1001).
